# EUROPÄISCHE PATENTSCHRIFT

(11) **EP 0 838 158 B1**
(45) Veröffentlichungstag und Bekanntmachung des Hinweises auf die Patenterteilung: **12.07.2000**
(21) Anmeldenummer: 97116275.5
(22) Anmeldetag: 18.09.1997
(51) Int. Cl.: A23G 9/28, A23G 9/30, A47L 15/00, A47L 15/39

(54) **Spüleinrichtung für Bestecke mit gewölbten Flächen**
Rinsing device for table utensils with domed surfaces
Dispositif de rinçage de couverts à surface bombée

(30) Priorität: 26.09.1996 AT 56596
(43) Veröffentlichungstag der Anmeldung: 29.04.1998
(73) Patentinhaber: Plesner, Udo, 6330 Kufstein (AT)
(72) Erfinder: Plesner, Udo, 6330 Kufstein (AT)
(74) Vertreter: Schwarzensteiner, Marie-Luise

(56) Entgegenhaltungen:
- DE-A- 3 213 488
- DE-A- 3 526 570
- DE-A- 4 136 923
- FR-A- 2 425 833

## Beschreibung

Die Erfindung betrifft eine Spüleinrichtung für Bestecke mit gewölbten Flächen mit einem oberen Düsenkopf und einem unteren Düsenkopf, welche an eine gemeinsame Wasserzufuhrleitung angeschlossen und im wesentlichen koaxial zueinander angeordnet sind. Erfindungsgemäß wird eine solche Vorrichtung zum Spülen von Eisportionierern verwendet.

Portionierlöffel, beispielsweise für Speiseeis, müssen zwischen ihrer Verwendung für verschiedene Eissorten gereinigt werden. Eine ausreichende Hygiene beim Portionieren von Speisen, insbesondere Eis, ist beispielsweise wegen der Salmonellengefahr, von besonderer Wichtigkeit. Üblicherweise werden Eisportionierer dazu in einem Wasserbad gereinigt. Das führt jedoch eher zur Vermehrung von Bakterien, da diese in den Wasserbädern, die über die Zeit mehr und mehr mit Kohlehydraten angereichert werden, ein ausgezeichnetes Nährmedium vorfinden. Der Eisportionierer beispielsweise kommt außerdem immer wieder mit dem kontaminierten Spülwasser in Kontakt, so daß eine Kontaminierung der abgegebenen Eisportionen mit Bakterien nicht ausgeschlossen werden kann.

Um eine solche Kontaminierung unter Anreicherung von Bakterien zu unterdrücken, wurde auch vorgeschlagen, dem Spülwasser sogenannte Bakterizide zuzugeben, was aber nach den heutigen Standards aus gesundheitlichen Gründen ebenfalls nicht wünschenswert ist.

In der DE-OS 32 13 488 wird auch eine Vorrichtung zur Reinigung von Eisportionierern beschrieben, mit welcher ein Eisportionierer innen und außen mittels Wasserstrahlen gereinigt werden kann. Diese Anlage weist zwei koaxial zueinander ausgerichtete Düsenköpfe auf, welche mittels einer Rohrleitung miteinander verbunden sind und gemeinsam über einen Hebel an einer Wasserzufuhrleitung für eine Wasserzufuhr zu öffnen sind.

Diese bekannten Spülanlagen haben im allgemeinen den Nachteil, daß bei jeder Spülung relativ viel Wasser verbraucht wird und daß es insbesondere an der Außenseite des löffelförmigen Bereiches des Eisportionierers zu keiner vollständigen Reinigung kommt. Darüber hinaus sind diese Anlagen relativ kompliziert aufgebaut und erfordern einen ziemlich hohen Montageaufwand.

Aufgabe der vorliegenden Erfindung ist es daher eine Spüleinrichtung der eingangs erwähnten Art zur Verfügung zu stellen, welche kompakt aufgebaut und einfach zu montieren ist, die löffelartigen Bestecke zuverlässig reinigt und mit welcher der Wasserverbrauch niedrig gehalten werden kann.

Erfindungsgemäße wird die Aufgabe dadurch gelöst, daß der untere Düsenkopf eine Abdeckkappe aufweist, die eine Ventilkammer umschließt, die über ein Steigrohr mit dem oberen Düsenkopf verbunden und der Wasseraustrittsseite gegenüberliegend mit einer Wasserzufuhrleitung verbindbar ist, wobei die Wasserzufuhr über den unteren Düsenkopf regelbar ist.

Die erfindungsgemäße Spüleinrichtung ist damit kompakt und einfach aufgebaut, ist platzsparend und darüber hinaus gegebenenfalls direkt mit einer üblichen Wasserzufuhrleitung zu verbinden. Durch Betätigung des unteren Ventils wird gleichzeitig Wasser in den oberen Düsenkopf befördert, so daß beispielsweise der Eisportionierer bzw. ein entsprechender Gegenstand gleichmäßig mit Wasser besprüht werden kann und so eine vollständige Reinigung gewährleistet ist.

In vorteilhafter Weise ist auch vorgesehen, daß die Düsenköpfe lotrecht zueinander ausgerichtet sind, was die Bedienung der Anlage ganz wesentlich erleichtert.

Die die Ventilkammer umschließende Abdeckkappe ist erfindungsgemäß mit der Wasserzufuhrleitung verbindbar. Die Verbindung könnte beispielsweise durch einen Bajonettverschluß oder dergleichen ausgeführt werden. Vorzugsweise wird diese Verbindung jedoch mittels eines Schraubverschlusses hergestellt. Das ermöglicht das Aufsetzen der Abdeckkappe auf bei Wasserleitungen herkömmliche Gewindestutzen.

Bei einer bevorzugten Ausführungsform der vorliegenden Erfindung ist diese Abdeckkappe über ein dazwischengeschaltetes Rohr mit der Wasserzufuhrleitung verbindbar. Auch hier wird die Verbindung vorzugsweise mit Hilfe von Schraubverschlüssen ausgeführt. Mit Hilfe des Rohres kann die Spüleinrichtung mit einer herkömmlichen Wasserzufuhrleitung verbunden werden, welche beispielsweise in einer Spülwanne endet. Dadurch kann ein guter Ablauf des Spülwassers gewährleistet werden, so daß ein zu spülendes Besteck, insbesondere ein Eisportionierer, nicht mit verschmutzten Wasser in Berührung kommt.

In einer weiteren bevorzugten Ausführungsform weist dieses Rohr einen Innenraum auf, dessen Querschnittsfläche größer als die Querschnittsfläche der Wasserzufuhrleitung ist. Durch die Erweiterung des Querschnittes wird eine im unteren Düsenkopf vorgesehene Ventilvorrichtung geführt und es muß weniger Kraft beim Öffnen des Ventils durch Druck aufgewendet werden. Je geringer der Querschnitt, desto größer wäre die aufzuwendende Kraft.

Bei einer weiteren bevorzugten Ausführungsform ist im unteren Düsenkopf eine Ventilstange verschiebbar angeordnet, welche durch die Abdeckkappe ragt und an ihrem unteren Ende einen Ventilkopf aufweist, der in den Raum in dem Rohr ragt. Der Ventilkopf wird durch den herrschenden Druck in der Wasserzufuhrleitung gegen die Öffnung gedrückt und verschließt diese solange, bis die Ventilstange durch Druck von oben nach unten geführt wird. Das Wasser tritt dann in die Ventilkammer, über welche der untere und der obere Düsenkopf kommunizieren ein und tritt durch Öffnungen in den Düsenköpfen zur Spülung aus.

Eine geeignete Maßnahme in diesem Zusammenhang ist es, daß in der Ventilkammer eine Druckfeder angeordnet ist, die sich einerseits an der Ventilstange und andererseits an einer zwischen der Wasserzufuhrleitung bzw. dem Raum in dem Rohr und der Ventilkammer angeordneten, mit Bohrungen versehenen, Zwischenscheibe abstützt. Diese Druckfeder unterstützt den Druck, welchen das Wasser aus der Zufuhrleitung auf den Ventilkopf ausübt, gegen einen vorzugsweise und erfindungsgemäß in der Zwischenscheibe vorgesehenen bzw. angeordneten Ventilsitz. Dadurch wird die Dichtigkeit der Vorrichtung weiter erhöht.

Zur Verbesserung der Dichtigkeit kann der Ventilkopf auf seiner dem Ventilsitz zugewandten Seite des weiteren mit einem Dichtmaterial versehen sein. Dazu kann diese Oberfläche mit Gummi, Silikongummi oder einem geeigneten Kunststoffmaterial belegt bzw. beschichtet sein, vorzugsweise wird jedoch in dieser Oberseite eine Nut zur Aufnahme eines umlaufenden Dichtringes angeordnet, der wieder aus Gummi, Silikongummi oder einem sonstigen geeigneten Kunststoffmaterial bestehen kann. Diese letztere Ausführungsform wird bevorzugt, da derartige Dichtringe im Handel erhältlich sind und gegebenenfalls bei Verschleiß ausgetauscht werden können.

Bei einer weiteren bevorzugten Ausführungsform der vorliegenden Erfindung kann durch Drehen der Abdeckkappe, welche die Ventilkammer umschließt, der zum Öffnen bzw. Schließen des Ventils erforderliche Druck eingestellt werden. Zu diesem Zweck ist es selbstverständlich erforderlich, daß die vorbeschriebene Druckfeder in der Ventilkammer angeordnet ist, und die Abdeckkappe mit der Wasserzufuhrleitung bzw. mit dem dazwischengeschalteten Rohr mittels einer Schraubverbindung verbunden ist. Die Schraubverbindung sollte zu diesem Zweck zwei Gewindestufen umfassen, wovon eine hauptsächlich zur Schraubverbindung und die andere zur Einstellung der Spannung der Feder dient.

Bei einer weiteren bevorzugten Ausführung der vorliegenden Erfindung ist im oberen Düsenkopf eine Einstellschraube oder dergleichen zur Regulierung der Durchflußmenge angeordnet. Mit dieser Einstellschraube kann nicht nur die Wasserdurchflußmenge im oberen Düsenkopf, sondern durch die kommunizierende Verbindung mit dem unteren Düsenkopf auch die dort austretende Wassermenge und damit die Spülkraft beeinflußt werden.

Der obere Düsenkopf 13 kann bei einer bevorzugten Ausführungsform über die Ventilkammer und über eine starres Zuleitungsrohr mit dem unteren Düsenkopf kommunizieren. Dieser obere Düsenkopf kann auch gegebenenfalls schwenkbar an diesem Zuleitungsrohr angeordnet sein, jedoch sollte diese Schwenkbarkeit durch eine Elektronik geregelt sein, um nicht die Bedienbarkeit der Spüleinrichtung zu beeinträchtigen.

Erfindungsgemäß können die Austrittsöffnungen im oberen Düsenkopf durch ein Brausesieb, auch Perlator genannt, ausgebildet sein. Durch einen solchen Perlator wird die austretende Wassermenge in bekannter Weise fein verteilt, und einspritzen vermindert, so daß ein optimales Spülen sichergestellt wird.

Zur Betätigung des Ventils im unteren Düsenkopf mittels der beschriebenen Ventilstange ist es zweckmäßig und bevorzugt, an deren oberem Ende einen Kugel- oder Halbkugelförmigen Andrückknopf vorzusehen. Durch einen solchen Andrückknopf wird die Betätigung des Ventils erleichtert und der zu spülende Gegenstand, welcher zum Andrücken verwendet wird, ist weitgehend vor Beschädigungen durch ein Verkratzen oder dergleichen sichergestellt.

Nachfolgend wird ein bevorzugtes Ausführungsbeispiel der vorliegenden Erfindung anhand der beiliegenden Zeichnungen genauer beschrieben, worin:
- Fig. 1: eine Seitenansicht einer erfindungsgemäßen Spüleinrichtung zeigt und
- Fig. 2: einen Vertikalschnitt durch die erfindungsgemäße Spüleinrichtung nach Fig. 1 zeigt.

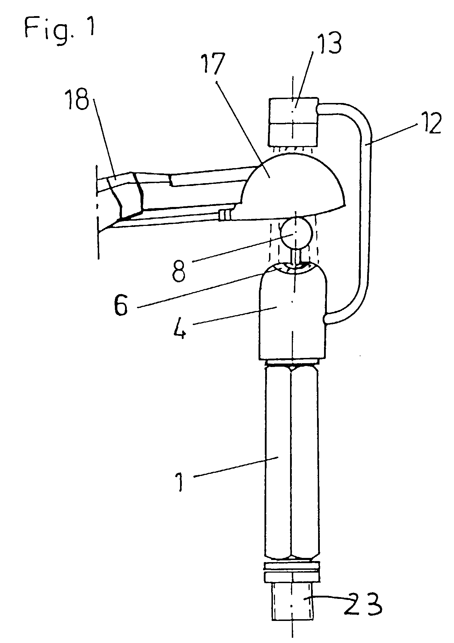

Die in Fig. 1 gezeigte Ausführungsform der erfindungsgemäßen Spüleinrichtung weist ein Rohr 1 auf, mit dessen unterem Ende 3 es mit einer Wasserzufuhrleitung 23 verbindbar ist. Die Verbindung kann durch einen Bajonett- oder Schnappverschluß herbeigeführt werden. Erfindungsgemäß ist das Rohr 1 mit der Wasserzufuhrleitung 23 jedoch verschraubt. Dazu ist das untere Ende des Rohres 1 als Gewindestutzen ausgebildet. Mittels dieses Gewindestutzens 3 ist das Rohr auf eine herkömmliche Wasserzufuhrleitung 23, die beispielsweise in einer Spülwanne mündet, aufschraubbar. Der Durchmesser des Gewindestutzens 3 kann entsprechend der herkömmlichen Rohrdurchmesser variieren, im allgemeinen wird der Gewindestutzen 3 ein 1"-,1/2"-, 3/8''- oder 1/4"-Gewinde aufweisen (1" = 25,4 mm).

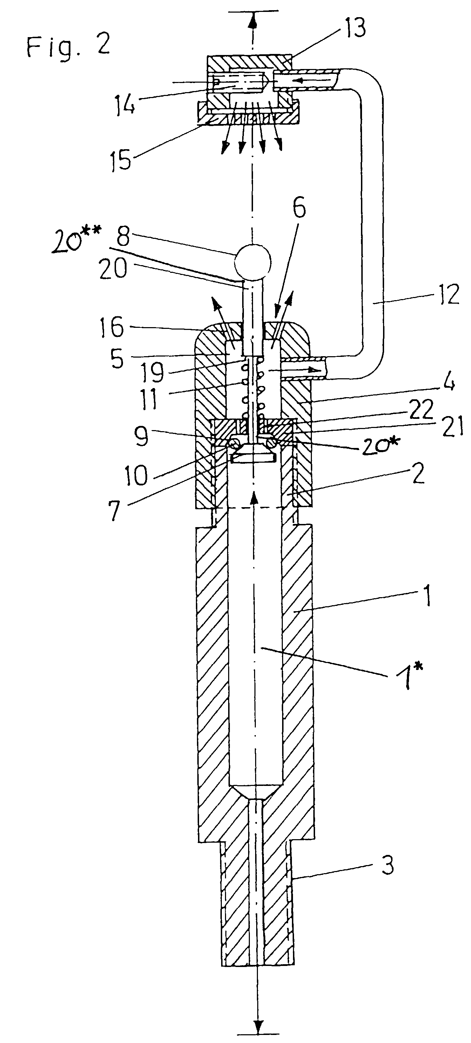

Am oberen Ende dieses Rohres 1 ist eine Abdeckkappe 4 derart aufgesetzt, daß zwischen dem Rohr 1 und der Abdeckkappe 4 eine Ventilkammer 5 ausgebildet wird. Die Abdeckkappe 4 kann wieder auf verschiedene Weise mit dem oberen Ende des Rohres 1 verbunden sein, beispielsweise durch einen Bajonett- oder Schnappverschluß. Bevorzugt wird jedoch ein Gewindestutzen 2 am oberen Ende des Rohres 1 vorgesehen, und in der Abdeckkappe 4 ein entsprechendes Innengewinde, womit die Abdeckkappe 4 auf das Rohr 1 aufgeschraubt werden kann. Wieder kann der Durchmesser des Gewindestutzens 2 entsprechend der herkömmlichen Rohrdurchmesser variieren, im allgemeinen wird der Gewindestutzen 2 jedoch ein 1''-,1/2''-, 3/8''- oder 1/4''-Gewinde aufweisen. In der Abdeckkappe 4 ist der untere Düsenkopf 6 ausgebildet, d.h., die Oberseite der Abdeckkappe 4 weist um eine zentrale Bohrung eine Anzahl gleichmäßig verteilter Bohrungen von geringem Durchmesser für den Austritt von Wasser auf. Dieser Düsenkopf 6 kommuniziert über die unter der Abdeckkappe 4 ausgebildete Ventilkammer 5 (Fig. 2) mit einem oberen Düsenkopf 13. In der dargestellten Ausführungsform erfolgt dies durch ein Zuleitungsrohr 12 das durch die Abdeckkappe 4 in die Ventilkammer 5 sowie in den Düsenkopf 13 mündet.

In der dargestellten Ausführungsform ist die Verbindung zwischen Zuleitungsrohr 12 und Düsenkopf 13 starr. In einer weiteren, jedoch nicht dargestellten Ausführungsform kann der Düsenkopf 13 auch um das Zuleitungsrohr 12 schwenkbar angeordnet sein. Das Verschwenken könnte dabei manuell erfolgen, sollte aber erfindungsgemäß durch eine geeignete Elektronik gesteuert werden, die sich beim Betätigen des Ventils im Düsenkopf 6 einschaltet.

Anhand der Fig. 2 soll nun der Aufbau der Ventilkammer bzw. des unteren Düsenkopfes und dem darin integrierten Ventil näher erläutert werden. In der Abdeckkappe 4, in welcher der ringförmig dargestellte Kopf 6 ausgebildet ist, und welche die Ventilkammer 5 umgrenzt, ist des weiteren eine Ventilstange 20 geführt, welche an ihrem unteren Ende 20* einen Ventilkopf 7 und am oberen Ende 20** einen Andrückknopf 8 (siehe auch Fig. 1) trägt. Der Ventilkopf 7 ist dabei in das Rohr 1 eingeführt, in dem er vertikal auf- und abgeführt werden kann.

Im allgemeinen wird der Ventilkopf 7 bereits durch den Wasserdruck in der Wasserzufuhrleitung und im Rohr 1 gegen das Austrittsende gepreßt. Durch Druck auf den Andrückknopf 8 verschiebt sich der Ventilkopf 7 in dem Raum 1* des Rohres 1, so daß Wasser in die Ventilkammer unter Druck austreten kann. Für den Ventilkopf 7 ist für diesen Zweck im Innern des Rohres ein Ventilsitz 9 ausgebildet, der das Rohr 1 bzw. den Innenraum 1* davon im wesentlichen abdeckt. Durch den herrschenden Wasserdruck wird der Ventilkopf gegen den Ventilsitz 9 gedrückt.

In geeigneter Weise ist, wie in Fig. 2 gezeigt, am oberen Ende des Rohres 1 eine Zwischenscheibe 21 ausgebildet, durch welche die Ventilstange 20 geführt ist und welche Bohrungen 22 für den Wasseraustritt aufweist, angeordnet. In bevorzugter Weise ist dann in dieser Zwischenscheibe 21 zugleich der Ventilsitz 9 ausgebildet.

Um die Dichtigkeit des Ventils zu erhöhen ist in der Ventilkammer 5 außerdem eine Druckfeder 11 angeordnet, die sich einerseits an einem an der Ventilstange 20 ausgebildeten Absatz 19 und andererseits an der in die Ventilkammer 5 weisenden Oberseite der Zwischenscheibe 21 abstützt. Die Druckfeder 11 drückt dabei den Ventilkopf 7 fester an den Ventilsitz 9, wobei die Zwischenscheibe 21, wie gezeigt, zwischen dem Rohr 1 und der Abdeckkappe 4 als Abschluß angeordnet ist und vorzugsweise aus Kunststoffmaterial gefertigt ist.

Die Dichtigkeit des Ventilsitzes kann erfindungsgemäß weiter dadurch erhöht werden, daß zwischen Ventilsitz 9 und dem Ventilkopf 7 ein Dichtmaterial vorgesehen wird. Dieses Dichtmaterial, wie beispielsweise Gummi, Silikongummi oder ein entsprechend geeignetes Kunststoffmaterial, können dazu auf der konisch zulaufenden Oberfläche des Ventils aufgebracht sein. Dieses Material kann auf dieser konisch zulaufenden Oberfläche flächenhaft aufgetragen sein oder es ist wie in Fig. 2 in Form eines Dichtringes 10 angeordnet. Zur sicheren Halterung des Dichtringes wird dabei bevorzugt, jedoch nicht dargestellt, in der konisch zulaufenden Oberseite des Ventilkopfes 7 eine Nut ausgebildet, in welcher der Dichtring 10 sicher gelagert werden kann. Für den Austritt des Spülwassers ist die Zwischenscheibe 21 im Bereich des Ventilsitzes und der Bohrung für die Ventilstange 20 mit weiteren Bohrungen 22 versehen.

Mit der gezeigten Ausführungsform wird des weiteren erreicht, daß durch mehr oder weniger weites Aufschrauben der Ventilkappe 4 auf den Gewindestutzen 2 die Druckfeder 11 variabel spannbar ist und somit der Druck, welcher zum Öffnen des Ventils bzw. des Ventilkopfes 7 notwendig ist, eingestellt werden kann. Gegebenenfalls kann zu diesem Zweck ein Arretierungsgewinde sowie ein Einstellgewinde vorgesehen werden.

Wie gezeigt, endet in der Abdeckkappe 4 eine Zufuhrleitung 12, über die Spülwasser, das in die Ventilkammer 5 eintritt, auch zu dem oberen Düsenkopf 13 strömt. Im oberen Düsenkopf 13 ist eine horizontal ausgerichtete Einstellschraube mit einer Dichtung, insbesondere einem Dichtring vorgesehen, mit der die Durchflußmenge des Spülwassers, das den oberen Düsenkopf 13 durchfließt, einstellbar ist. Damit läßt sich auch der Wasserdruck am unteren Düsenkopf variieren. Zur Betätigung der Spüleinrichtung genügt es, beispielsweise den in Fig. 1 dargestellten Eisportionierer 18 oder ein anderes löffel- oder gabelartiges Besteck zwischen die Düsenköpfe 6 und 13 einzuführen und mit der konvex geformten Seite des Besteckes auf den Andrückknopf 8 zu drücken. Durch den Andruck wird der Ventilkopf 7 vom Ventilsitz 9 weggedrückt und Spülwasser kann in die Ventilkammer 5 eintreten. Es strömt einerseits durch den Düsenkopf 6 aus und wird andererseits durch die Zufuhrleitung 12 zum Düsenkopf 13 geleitet wo es bevorzugt durch einen darin angeordneten Perlator 15 nach unten ausströmen kann. Während des Spülvorganges wird von den Düsenknöpfen bevorzugt Kaltwasser in einem Druckbereich von zwischen 2 und 4 bar abgegeben. Gegebenenfalls kann auch temperiertes Wasser zum Spülen verwendet werden.

Selbstverständlich kann die erfindungsgemäße Spüleinrichtung nicht nur ausschließlich direkt an ein Wasserleitungsnetz angeschlossen werden. Es kann auch ein eigener Spülkasten mit einem Wasserbehälter und einer Förderpumpe versehen sein. Auf diese Weise kann die erfindungsgemäße Spülvorrichtung auch bei Eisvitrinen, die auf der Straße stehen und keinen Wasserleitungsanschluß aufweisen, eingesetzt werden. Ein wesentlicher Vorteil der erfindungsgemäßen Einrichtung ist und bleibt in jedem Falle, daß der notwendige Wasserverbrauch erheblich gesenkt werden kann und dennoch eine ausreichende Spülung bzw. Waschung der Gegenstände möglich ist, und eine bakterielle Kontaminierung damit verhindert werden kann.

## Patentansprüche

1. Spüleinrichtung für Bestecke mit gewölbten Flächen, mit einem unteren Düsenkopf (6) und einem oberen Düsenkopf (13), welche an eine gemeinsame Wasserzufuhrleitung angeschlossen und im wesentlichen koaxial zueinander ausgerichtet sind, dadurch gekennzeichnet, daß der untere Düsenkopf (6) eine Abdeckkappe (4) aufweist, die eine Ventilkammer (5) umschließt, die über ein Steigrohr (12) mit dem oberen Düsenkopf (13) verbunden und der Wasseraustrittsseite gegenüberliegend mit einer Wasserzufuhrleitung verbindbar ist, wobei die Wasserzufuhr über den unteren Düsenkopf (6) regelbar ist.

2. Spüleinrichtung nach Anspruch 1, dadurch gekennzeichnet, daß die Düsenköpfe (6,13) lotrecht zueinander ausgerichtet sind.

3. Spüleinrichtung nach Anspruch 1 oder 2, dadurch gekennzeichnet, daß die Abdeckkappe (4) mit einer Wasserzufuhrleitung vorzugsweise verschraubbar ist.

4. Spüleinrichtung nach einem der Ansprüche 1 bis 3, dadurch gekennzeichnet, daß die Abdeckkappe (4) mit einem Rohr (1) vorzugsweise verschraubbar ist, das wiederum mit einer Wasserzufuhrleitung vorzugsweise verschraubbar ist.

5. Spüleinrichtung nach Anspruch 4, dadurch gekennzeichnet, daß das Rohr (1) einen Raum (1*) aufweist, dessen Querschnittsfläche größer als die Querschnittsfläche der Wasserzufuhrleitung ist.

6. Spüleinrichtung nach einem der Ansprüche 1 bis 5, dadurch gekennzeichnet, daß im unteren Düsenkopf (6) eine Ventilstange (20) verschiebbar angeordnet ist, welche durch die Abdeckkappe (4) ragt und an ihrem unteren Ende (20*) einen Ventilkopf (7) aufweist, der in den Raum (1*) ragt.

7. Spüleinrichtung nach einem der Ansprüche 1 bis 6, dadurch gekennzeichnet, daß in der Ventilkammer (5) eine Druckfeder (11) angeordnet ist, die sich einerseits an der Ventilstange (20) und andererseits an einer zwischen der Wasserzufuhrleitung bzw. dem Raum (1*) und der Ventilkammer (5) angeordneten, mit Bohrungen (22) versehenen Zwischenscheibe (21) abstützt.

8. Spüleinrichtung nach einem der Ansprüche 1 bis 7, dadurch gekennzeichnet, daß an der Zwischenscheibe (21) ein Ventilsitz (9) für den Ventilkopf (7) angeordnet ist.

9. Spüleinrichtung nach Anspruch 8, dadurch gekennzeichnet, daß der Ventilkopf (7) auf seiner dem Ventilsitz (9) zugewandten Seite mit einem Dichtmaterial (10) versehen ist.

10. Spüleinrichtung nach einem der Ansprüche 1 bis 9, dadurch gekennzeichnet, daß durch Drehen der Abdeckkappe (4) der zum Öffnen bzw. Schließen des Ventils erforderliche Druck einstellbar ist.

11. Spüleinrichtung nach einem der Ansprüche 1 bis 8, dadurch gekennzeichnet, daß im oberen Düsenkopf (13) eine Einstellschraube (14) zur Regulierung der Wasserdurchflußmenge angeordnet ist.

12. Spüleinrichtung nach einem der Ansprüche 1 bis 11, dadurch gekennzeichnet, daß im oberen Düsenkopf (13) ein Brausesieb (15) angeordnet ist.

13. Spüleinrichtung nach einem der Ansprüche 1 bis 12, dadurch gekennzeichnet, daß der obere Düsenkopf (13) um die Zufuhrleitung (12) schwenkbar angeordnet ist.

14. Spüleinrichtung nach einem der Ansprüche 1 bis 13, dadurch gekennzeichnet, daß der Ventilstange (20) an ihrem oberen Ende (20**) ein kugel- oder halbkugelförmiger Andrückknopf (8) zugeordnet ist.

15. Verwendung der Spüleinrichtung nach einem der Ansprüche 1 bis 14 zum Spülen von Eisportionierern.

## Claims

1. Rinsing device for table utensils with domed surfaces having a lower nozzle head (6) and an upper nozzle head (13) joint to a common supply duct and aligned essentially coaxially to each other, characterised in that the lower nozzle head (6) has a cover (4) enclosing a valve chamber (5), which is connected with the upper nozzle head (13) via a rising pipe (12) and connectable with the supply duct opposed to the side of water output, whereby the water supply is controllable by means of the lower nozzle head (6).

2. Rinsing device of claim 1 characterised in that the nozzle heads (6, 13) are aligned vertically to each other.

3. Rinsing device of claim 1 or 2, characterised in that the cover (4) may be preferably screwed to the water supply duct.

4. Rinsing device of claims 1 to 3, characterised in that the cover (4) may be preferably screwed with a pipe (1), which again may be preferably screwed with the water supply duct.

5. Rinsing device of claim 4, characterised in that the pipe (1) has a space (1*) the cross section of which is greater than the cross section of the water supply duct.

6. Rinsing device of any of claims 1 to 5, characterised in that within the lower nozzle head (6) a valve rod (20) is slidably arranged, projecting through the cover (4) and having a valve head (7) at its lower end (20*), projecting into the space (1*).

7. Rinsing device of one of claims 1 to 6, characterised in that a pressure spring (11) is arranged within the valve chamber (5) supported on the one hand at the valve rod (20) and on the other hand at an intermediate washer (21) arranged between the water supply duct or space (1*), respectively and the valve chamber (5) that is provided with through bores (22).

8. Rinsing device of one of claims 1 to 7, characterised in that at the intermediate washer (21) a valve seat (9) for the valve head (7) is provided.

9. Rinsing device of claim 8, characterised in that the valve head (7) is provided with a sealing material (10) on its side facing the valve seat (9).

10. Rinsing device of one of claims 1 to 9, characterised in that by turning the cover (4), the pressure required to open or close the valve is adjustable.

11. Rinsing device of one of claims 1 to 8, characterised in that in the upper nozzle head (13) an adjusting screw (14) is provided for controlling the rate of flow of water.

12. Rinsing device of one of claims 1 to 11, characterised in that in the upper nozzle head (13) a rinsing screen (15) is arranged.

13. Rinsing device of one of claims 1 to 12, characterised in that the upper nozzle head (13) is arranged pivotable around the supply duct (12).

14. Rinsing device of one of claims 1 to 13, characterised in that the valve rod (20) has a spherical or semi-spherical push-button at its upper end (20**).

15. Use of the rinsing device of one of claims 1 to 14 for rinsing of ice-portioners.

## Revendications

1. Dispositif de rinçage de couverts à surfaces bombées, comprenant une tête de pulvérisation inférieure (6) et une tête de pulvérisation supérieure (13), qui sont raccordées à une conduite d'arrivée d'eau commune et qui sont orientées sensiblement coaxialement l'une par rapport à l'autre, caractérisé en ce que la tête de pulvérisation inférieure (6) comprend une coiffe (4) de couverture, qui entoure une chambre de soupape (5) reliée par un tuyau ascendant (12) à la tête de pulvérisation supérieure et qui peut être reliée à l'opposé du côté de la sortie d'eau à une conduite d'arrivée d'eau, de sorte que l'arrivée d'eau est réglable par la tête de pulvérisation inférieure (6).

2. Dispositif de rinçage selon la revendication 1, caractérisé en ce que les têtes de pulvérisation (6, 13) sont orientées verticalement l'une vers l'autre.

3. Dispositif de rinçage selon la revendication 1 ou 2, caractérisé en ce que la coiffe (4) de couverture est de préférence vissable sur une conduite d'arrivée d'eau.

4. Dispositif de rinçage selon l'une des revendications 1 à 3, caractérisé en ce que la tête de couverture (4) est de préférence vissable sur un tuyau (1) qui est lui-même de préférence vissable sur une conduite d'arrivée d'eau.

5. Dispositif de rinçage selon la revendication 4, caractérisé en ce que le tuyau (1) comprend un espace (1*) dont la surface en section est supérieure à la surface en section de la conduite d'arrivée d'eau.

6. Dispositif de rinçage selon l'une des revendications 1 à 5, caractérisé en ce qu'une tige de soupape (20) est montée coulissante dans la tête de pulvérisation inférieure (6) et s'étend à travers la coiffe de couverture (4) en comprenant à son extrémité inférieure (20*) une tête de soupape (7) qui s'étend dans l'espace (1*).

7. Dispositif de rinçage selon l'une des revendications 1 à 6, caractérisé en ce qu'un ressort de pression (11) est monté dans la chambre de soupape (5) et s'appuie d'un côté sur la tige de soupape (20) et de l'autre côté sur une plaque intermédiaire (21) comprenant des trous (22), montée entre la conduite d'arrivée d'eau ou l'espace (1*) et la chambre de soupape (5).

8. Dispositif de rinçage selon l'une des revendications 1 à 7, caractérisé en ce qu'un siège de soupape (9) est disposé sur la plaque intermédiaire (21) pour la tête de soupape (7).

9. Dispositif de rinçage selon la revendication 8, caractérisé en ce que la tête de soupape (7) est pourvue d'un matériau d'étanchéité (10) sur son côté tourné vers le siège de soupape (9).

10. Dispositif de rinçage selon l'une des revendications 1 à 9, caractérisé en ce que la pression nécessaire à l'ouverture ou à la fermeture de la soupape est réglable par rotation de la coiffe de couverture (4).

11. Dispositif de rinçage selon l'une des revendications 1 à 8, caractérisé en ce qu'une vis de réglage (14) est montée dans la tête de pulvérisation supérieure (13) pour le réglage du débit d'eau.

12. Dispositif de rinçage selon l'une des revendications 1 à 11, caractérisé en ce qu'une pomme de douche (15) est montée dans la tête de pulvérisation supérieure (13).

13. Dispositif de rinçage selon l'une des revendications 1 à 12, caractérisé en ce que la tête de pulvérisation supérieure (13) est montée pivotante sur la conduite d'arrivée d'eau (12).

14. Dispositif de rinçage selon l'une des revendications 1 à 13, caractérisé en ce que la tige de soupape (20) comprend à son extrémité supérieure (20**) un bouton poussoir sphérique ou semi-sphérique (8).

15. Utilisation du dispositif de rinçage selon l'une des revendications 1 à 14 pour le rinçage des portionneurs à glace.
